(19) Europäisches Patentamt
European Patent Office
Office européen des brevets

(11) **EP 2 382 405 B1**

(12) **EUROPEAN PATENT SPECIFICATION**

(45) Date of publication and mention
of the grant of the patent:
**13.11.2013   Bulletin 2013/46**

(21) Application number: **09804162.7**

(22) Date of filing: **22.12.2009**

(51) Int Cl.:
**F16H 61/662** (2006.01)      **F16D 48/06** (2006.01)

(86) International application number:
**PCT/NL2009/000268**

(87) International publication number:
**WO 2010/074560 (01.07.2010 Gazette 2010/26)**

(54) **METHOD FOR CONTROLLING A FRICTION TRANSMISSION SUCH AS A FRICTION CLUTCH OR A CONTINUOUSLY VARIABLE TRANSMISSION**

VERFAHREN ZUR STEUERUNG EINES REIBGETRIEBES WIE ETWA EINE REIBKUPPLUNG ODER EIN STUFENLOSES GETRIEBE

PROCEDE DESTINE A COMMANDER UNE TRANSMISSION A FRICTION TELLE QU'UN EMBRAYAGE A FRICTION OU UNE TRANSMISSION A VARIATION CONTINUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:   **24.12.2008   NL 2002373**

(43) Date of publication of application:
**02.11.2011   Bulletin 2011/44**

(73) Proprietor: **Robert Bosch GmbH**
**70442 Stuttgart (DE)**

(72) Inventors:
• **VAN DER NOLL, Erik**
**NL-3315 NL Dordrecht (NL)**
• **VAN DER SLUIS, Francis, Maria, Antonius**
**NL-5271 HP Sint-Michielsgestel (NL)**
• **VAN DONGEN, Antonius, Adrianus, Helena, Maria**
**NL-5126 PS Gilze (NL)**

(74) Representative: **Plevier, Gabriel Anton Johan Maria**
**Bosch Transmission Technology B.V.**
**PO Box 500**
**5000 AM Tilburg (NL)**

(56) References cited:
**EP-A- 1 302 702      EP-A- 1 482 216**
**WO-A-98/12457      DE-A1- 10 050 218**
**US-A- 4 631 043      US-A1- 2004 260 444**

**Description**

The present invention relates to a method for controlling a friction transmission such as a friction clutch or a continuously variable transmission or CVT, which transmission types are typically applied in a drive line between an engine or motor and a load such as the driven wheels of a motorised vehicle. These known transmissions include two friction surfaces that can be brought into engagement, i.e. into frictional contact, whereby a normal force is effected there between, i.e. a force oriented predominantly perpendicular thereto. Hereby, at least one, i.e. rotationally driving friction surface is arranged rotatable, such that it can exert a tangentially oriented friction or driving force on the respective other one, rotationally driven friction surface.

It is well-known that -at least by approximation- the maximum friction force $Fw_{MAX}$ that can be exerted in the said frictional contact is linearly dependent on the said normal force Fn according to:

$$Fw_{MAX} = \mu \cdot Fn \qquad (1),$$

wherein the parameter $\mu$ is the coefficient of friction that depends on many system parameters, such as the material and roughness of the friction surfaces, the presence and type of lubricant in the frictional contact, the temperature, etc.

In the friction transmission with rotationally arranged friction surfaces, the friction force Fw is effected by, or results in a drive torque T according to:

$$T = Fw \cdot R_{EFF} \qquad (2),$$

wherein $R_{EFF}$ denotes the radius at which the contact between the rotating friction surfaces takes place, at least effectively.

Based on the above-equations it can be derived that in order for the friction transmission to be able to transmit the drive torque T, a minimum normal force $Fn_{MIN}$ is required according to:

$$Fn_{MIN} = \frac{T}{\mu \cdot R_{EFF}} \qquad (3).$$

Typically, however, the normal force level that is actually applied in the transmission will be set considerably in excess of the such minimum required value $Fn_{MIN}$ thereof, because an insufficient normal force Fn will result in a (rotational) speed difference, i.e. a mutual tangential movement or slip between the friction surfaces, which in turn adversely results in energy, i.e. efficiency loss and possibly, i.e. in case of excessive slip, in damage to the friction surfaces. For example, the normal force Fn may be set to a fixed level $Fn_{MAX}$ that is sufficient for allowing the transmission to reliably transmit the maximum drive torque $T_{MAX}$ that occurs during normal operation. Alternatively, the normal force Fn to be set is adapted to, i.e. is actively controlled in relation to the instantaneous level of the drive torque T as increased by a safety factor Sf, e.g. according to:

$$Fn = \frac{T}{\mu \cdot R_{EFF}} \cdot Sf \qquad (4).$$

Such safety factor Sf is larger than 1, typically has a value between 1 and 2, and is incorporated to account for inaccuracies in the measured or estimated value of the other parameters in the equation. The advantage of this latter method over applying a fixed normal force $Fn_{MAX}$ is that, typically, the durability as well as the overall efficiency of the transmission is improved thereby.

Inter alia it is remarked that the said normal force may in a practical transmission design be realised only indirectly, i.e. as a component of another force that is oriented at an angle $\alpha$ (i.e. rather than perpendicular) relative to a plane wherein the said friction surfaces lie. Further, the said normal force is often generated by means of a hydraulic control pressure Pc acting on an active surface As, in which case it may be the pressure that is the controlled parameter:

$$Pc = \frac{T}{\mu \cdot \cos(\alpha) \cdot R_{EFF} \cdot As} \cdot Sf \qquad\qquad (5).$$

In this case too, the minimum required control pressure is thus increased by a safety factor to determine the desired control pressure Pc that is actually controlled.

In the above-described methods the normal force (or control pressure) is controlled at least in proportion to the parameter of the said drive torque to be transmitted by the friction transmission, i.e. a desired, absolute value or set-point is generated therefore, where after the actually prevailing normal force is controlled, whether open- or closed-loop, to coincide with such set-point.

In the art also indirect control methods have been suggested, wherein the normal force (or control pressure) is controlled in dependence on an other transmission parameter than the drive torque and wherein the control method generates only a control action, i.e. a relative command of increasing, decreasing or maintaining the said normal force (or control pressure). For example from the European patent application EP-A-0858564, it is known to measure a relative movement or slip between the said two friction surfaces and to increase the normal force (or control pressure) is the measured slip exceeds a control, i.e. desired value therefore and vice versa.

Another indirect and relative control method for the normal force is described in the non-prepublished international patent application number EP2008/053548, published as WO 2009/007450, EP-B- 2 176 572. In relation to the well known belt-and-pulley-type CVT, comprising two pulleys that are both in (separate) frictional contact with a flexible drive belt of the transmission, which belt is arranged around and between the pulleys thus providing a driving connection there between, it is described therein to correlate natural fluctuations or a forced oscillation of the normal force in one of the pulley-belt contacts to the resulting fluctuations or oscillations of the speed ratio of the transmission, i.e. the ratio between the rotational speed of an input or driving pulley and the rotational speed of an output or driven pulley thereof. This particular control method relies on the phenomenon that in the said CVT the speed ratio shows a minimum in relation to the normal force, which minimum provides the optimum, i.e. minimum normal force level, and which minimum can be found, i.e. converged to automatically by the said relation between the speed ratio and the normal force. As a result, this control method is self-optimising, i.e. automatically adapts to the instantaneously detected or predetermined operational conditions of the transmission. Further, the algorithm and the measurement means or sensors required for this control method are relatively uncomplicated and/or are readily available and may thus be implemented in a cost effective manner.

These latter two, relative control methods, i.e. slip control and self-optimising control respectively are to be favoured principally, since thereby the normal force that is actually applied in the pulley-belt contact can be controlled to a comparatively low, if not minimally required level, even without the need to actually measure the drive torque to be transmitted.

All of the above-described normal force control methods, i.e. whether providing an absolute set-point or a relative control action, function satisfactorily per se. However, these existing control methods may be improved further in terms of control accuracy and/or responsiveness. According to the present invention, in this respect a particularly advantageous control method is realised by combining both types of control method into one new method as follows.

According to the invention an absolute, torque-based control method is used to generate a set-point that at least serves as a starting point for a relative, e.g. slip- or ratio oscillation-based, control method. A suchlike compound control method has the advantage that it improves the response of the said relative control method in that it departs from an initial value for the controlled parameter, i.c. the normal force or the control pressure, that is at least adapted to and possibly already close to the minimum value controlled by the relative method. According to the invention, the output of the relative method is integrated (i.e. aggregated over time) and added to the output of the absolute method to generate a compound desired value for the controlled parameter.

In the detailed elaboration of the invention, the control method proposed combines the direct and safe response to a change in the torque to be transmitted by the friction transmission of the torque-based method with the accuracy and adaptiveness of the slip-based and self-optimising ratio oscillation control method. Especially, relatively rapid and/or large torque changes are more reliably accommodated by the compound control method than by, for instance, the self-optimising control alone.

In the above elaboration of the invention, it may be considered beneficial to omit the safety factor from the calculation of the set-point for the normal force or the control pressure in the absolute, torque-based method (e.g. by setting Sf equal to 1 in equation (4) or (5)), since that would maximise the responsiveness of the control method as a whole and since the said inaccuracies in the estimated/ calculated drive torque are automatically accounted for by the relative, slip-based or ratio oscillation-based control method anyway.

According to the present invention it was instead found to be advantageous to apply a substantial safety factor of 1.1 or higher, preferably 1.3 or higher, to provide the control method with an inherent robustness and fault tolerance.

At least in case a combination of the torque-based method with the ratio oscillation-based method, it was found that the safety factor should remain smaller than 3.0, preferably smaller than 2.0, to avoid that the said self-optimisation converges to a local minimum in the speed ratio versus normal force relationship instead of the global and lowest minimum.

In a further embodiment of the invention the generation of the set-point by the absolute method, in particular the preset relationship between the drive torque and the normal force (or control pressure) applied therein, is adapted based on the output of the relative method. More in particular, when the output of the relative method is zero, e.g. when the measured slip is equal to the desired slip in the friction transmission or when the speed ratio is at a minimum, the then prevailing normal force (or control pressure) and drive torque levels are used to determine the actual coefficient of friction, for example using the equation (3) or the equation (5) with the safety factor Sf assumed to be equal to 1. This actual coefficient of friction is then communicated to and/or is used in the absolute method for generating the said set-point the normal force (or control pressure), i.e. for adapting the preset coefficient of friction that is applied in the calculation thereof. After all, during operation of the transmission, the coefficient of friction may change due to, for instance, wear of the said two friction surfaces, or may even vary in relation to operational parameters of the transmission, such as ambient temperature and lubrication quantity and properties.

The invention will now be elucidated further along the drawing figures, whereof:

figure 1 provides a basic layout of a known type of friction transmission, in particular a continuously variable transmission with two pulleys and a drive belt,
figure 2 provides a cross-section in longitudinal direction of the drive belt,
figure 3 illustrates a known absolute, torque-based transmission control method by way of a block diagram,
figure 4 illustrates a known relative, slip-based transmission control method by way of a block diagram,
figure 5 illustrates a further relative, i.c. a self-optimising transmission control method in by way of a block diagram,
figure 6 diagrammatically illustrates a control method in a first example, not claimed,
figure 7 diagrammatically illustrates a control method according to a second embodiment of the invention.

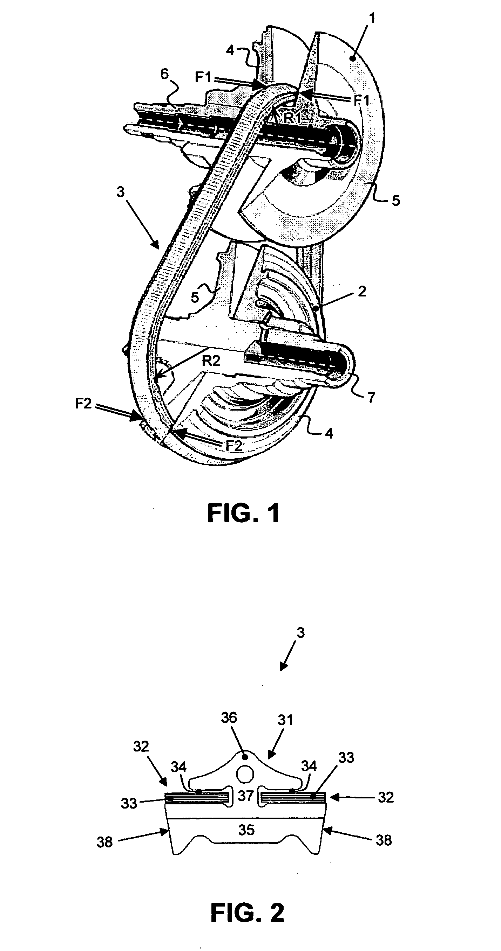

Figure 1 provides a perspective view of the basic parts of the known continuously variable transmission or CVT that comprises two pulleys 1, 2 and a drive belt 3 that is wrapped around and in frictional contact with the pulleys 1, 2. The pulleys 1, 2 are each provided with two conical discs 4, 5 on a respective pulley shaft 6 or 7, between which discs 4, 5 a tapered groove of variable width is defined that accommodates a part of the drive belt 3 that is bent in its longitudinal direction, whereby an effective radius of contact R1, R2 exists there between. At least one disc 4 of each pulley 1 and 2 is axially movable towards the respective other disc 5, e.g. by means of a piston/cylinder-assembly (not shown) that associated with each respective pulley, for exerting a respective axially oriented clamping force F1, F2 on the belt 3. Because of the conical shape of the pulley discs 4, 5 these clamping forces F1, F2 are split in a first force component perpendicular or normal to the frictional contact between belt 3 and pulleys 1, 2 and a radially oriented second component by which the belt 3 is tensioned. The level of a respective normal force component Fn1, Fn2 determines the driving force that can be transferred between the belt 3 and the respective pulley 1 or 2 by means of friction, whereas the ratio Fn1/Fn2 there between determines and is used to control the effective contact radii R1 and R2 between the belt 3 and the respective pulleys 1 and 2.

In figure 1 the CVT is depicted in the largest possible speed ratio $\omega 1/\omega 2$ that is defined as the quotient of a transmission input speed $\omega 1$ (i.e. the rotational speed $\omega 1$ of an input shaft 6 and of the associated, i.e. input pulley 1) and of a transmission output speed w2 (i.e. the rotational speed w2 of an output shaft 7 and of the associated, i.e. output pulley 2). The clamping forces F1, F2 and thus also the normal force components Fn1, Fn2 thereof are realised by exerting a respective hydraulic control pressure Pc1, Pc2 in the cylinder of the piston/cylinder-assembly associated with the axially moveable discs 4 of a respective pulley 1, 2. This type of transmission and its operation and control are all well known in the art.

In figure 2 an example of the drive belt 3 shown in a longitudinal cross-section thereof. The drive belt 3 of figure 2 is of the known, so-called pushbelt or Van Doorne type. The pushbelt 3 comprises an endless tensile body 32, which is composed of two sets of a number of mutually 'nested', i.e. radially stacked, flat metal rings 33, and a number of metal segments 31, the so-called transverse elements 31 of the belt 3. The sets of rings 33 are each mounted in a respective recess or slot 34 of the transverse elements 31, allowing the elements 31 to slide along the circumference of the tensile body 32. Each such slot 34 is provided on and opens towards a lateral side of the transverse element 31 in-between an effectively trapezoid-shaped lower part 35 and a more or less arrow-head shaped upper part 36 thereof. These upper and lower parts 35 and 36 are interconnected via a central pillar part 37 of the transverse element 31. The transverse elements 31 of the belt 3 arrive into contact with the pulleys 1 and 2 during operation of the CVT through lateral contact or friction surfaces 38 that are normally provided with a profile of alternating ridges and grooves (not shown).

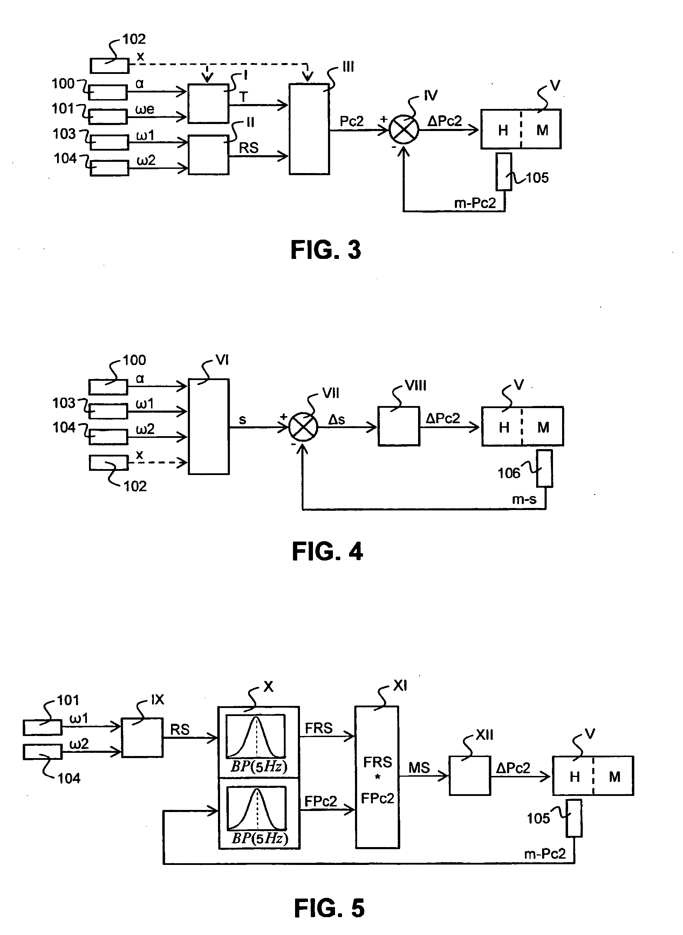

It is known to control the level of at least one of the above-mentioned clamping forces, generally the axial force F2 applied at the output pulley 2, directly in relation to a drive torque T to be transmitted by the CVT by a setting a corresponding hydraulic control pressure Pc2 in the piston/cylinder-assembly of the respective pulley 2, which known torque-based control method is schematically illustrated in figure 3.

In the known torque-based control method first of all (a signal representative of) the said drive torque T is determined in block I, for example based on signals representative of the engine throttle opening a and the engine rotational speed we, as measured by respective sensors 100 and 101. Further sensors 102 and signals x may also be involved in determining the drive torque T, as indicated.

In parallel, in block II of the control scheme, a transmission speed ratio signal RS is generated that is proportional to the ratio $\omega 1/\omega 2$ between the a signal representing the transmission input speed $\omega 1$ and transmission output speed w2 and the second speed signal w2 respectively, as measured by respective sensors 103 and 104.

Next in block III of the control scheme, the hydraulic control pressure Pc2 that is required in the cylinder of the piston/cylinder-assembly of the output pulley 2 is determined based on the transmission speed ratio RS and the drive torque T, for example based on the above equation (5). Further sensors 102 and signals x may also be involved in determining such required value or set-point Pc2 for the output pulley pressure, as indicated.

In the above respect it is remarked that in case of a more simple friction transmission such a clutch, the speed ratio signal RS may note be required for this purpose.

Next, in block IV of the control scheme, the required output pulley pressure set-point Pc2 is compared with the prevailing or actually occurring output pulley pressure m-Pc2, i.e. as measured by pressure sensor 105, to arrive at an appropriate control action ΔPc2 therefor. Such may be realised simply by subtracting the said measured pressure value m-Pc2 from the said set-point value Pc2, i.e. by means of a comparator as indicated. This control action ΔPc2 is then executed in block V that represents the transmission in terms of its hydraulic control system H that includes  the pulley cylinder of the output pulley 2, as well as of the mechanical components M thereof. It is noted that, typically, the control action ΔPc2 will be modified to improve the response of the system as a whole, for example using a well-known PID-controller to prevent, for instance, overshoot, oscillation, or lagging of the prevailing output pulley pressure m-Pc2.

This known control method thus departs from an approximation of the drive torque T to be transmitted by the transmission and determined an absolute value or set-point for the required output pulley pressure Pc2 based thereon. It is, however, also known to control the transmission without such absolute pressure set-point Pc2 and based solely on relative, pressure control actions ΔPc2. A first, i.c. a slip-based example of this latter type of relative control is schematically illustrated in figure 4. This example is not claimed.

In the known slip-based control method first of all a desired value or set-point for the slip s between the friction surfaces of the transmission, i.c. the lateral contact surfaces 38 of the drive belt 3 and the pulley discs 4, 5, is determined in block VI, for example based on signals representative of the engine throttle opening $\alpha$, the transmission input speed $\omega 1$ and the transmission output speed w2, as measured by respective sensors 100, 103, 104. Further sensors 102 and signals x may also be involved in determining the slip set-point s.

Next, in block VII of the control scheme, the slip set-point s is compared with the actually occurring transmission slip m-s, i.e. as measured by slip sensor 106, to arrive at an appropriate control action Δs. In this example such is realised by subtracting the measured slip value m-s from the said set-point slip value s, as indicated. This control action As is then fed to block VIII where it is converted into a corresponding control action ΔPc2 for the output pulley pressure Pc2. This latter pressure control action ΔPc2 is then executed in block V that represents the transmission.

A further, i.c. a self-optimising ratio oscillation-based example, which corresponds to the invention, of a relative control method is schematically illustrated in figure 5. This latter control method relies on naturally occurring or actively induced fluctuations, in particular oscillations, of the transmission ratio $\omega 1/\omega 2$ and typically requires three sensors 101, 104 and 105 that generate respective parameter signals (e.g. an electronic current, voltage, frequency and/or amplitude) proportional to a respective transmission parameter. The first sensor 101 detects the transmission input speed $\omega 1$, the second sensor 104 detects the transmission output speed $\omega 2$ and the third sensor 105 detects, i.e. measures the output pulley pressure m-Pc2 that is actually occurring.

In block IX of the present control scheme, a transmission speed ratio signal RS is generated that is proportional to the ratio $\omega 1/\omega 2$ between the first speed signal $\omega 1$ and the second speed signal w2 respectively.

Next, in block X, a respective signal component FRS, FPc2 of a desired frequency or range of frequencies is generated based on the transmission speed ratio signal RS and the output pulley pressure signal m-Pc2 respectively. More specifically, both said signals RS and m-Pc2 are separately passed through a so-called band pass filter that filters out (i.e. allows to pass to the next block XI of the control scheme) such signal component FRS, FPc, in this particular example the 5 Hz frequency component as indicated.

Next, in block XI, a multiplication signal MS is generated that is proportional to the multiplication FRS*FPc2 of the filtered speed ratio signal FRS and the filtered output pulley pressure signal FPc2. It is this multiplication signal MS or at least a characteristic thereof that is subsequently used to control the transmission, in particular to control the output pulley pressure Pc2 by generating an appropriate control action ΔPc2 therefor in block XII, which control action ΔPc2 is executed in block V that represents the transmission. The said characteristic of the multiplication signal MS can simply be the sign thereof (i.e. positive, negative or zero) in relation whereto the control action ΔPc2 respectively consists of either decreasing "↓", increasing "↑" or maintaining "↔" the actual output pulley pressure m-Pc2 level. Preferably, the magnitude of the control action ΔPc2 is generated in relation to magnitude of the multiplication signal MS that may be obtained by passing it through a low pass filter.

Inter alia it is remarked that in all three of the above-described, existing control methods, i.e. whether providing an absolute set-point (Pc2 or s) or a relative control action (ΔPc2), the input pulley pressure Pc1 can determined and controlled as a consequence of maintaining a desired transmission speed ratio ω1/ω2.

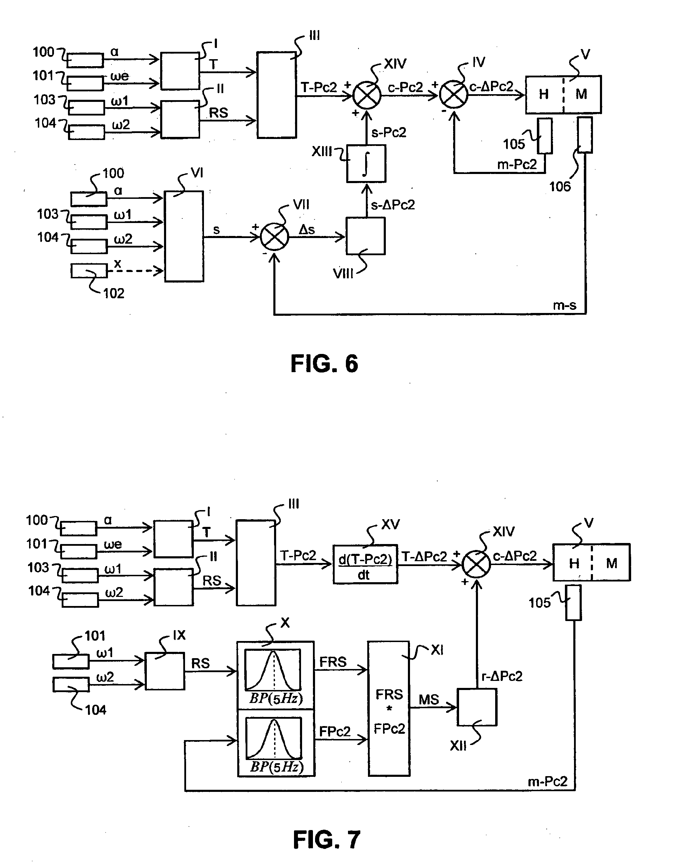

According to the invention these existing control methods may be improved further in terms of control accuracy and/or responsiveness, in particular by advantageously combining the said absolute, torque-based method with one the said relative, ratio-oscillation-based methods, whereof figure 6 provides a first example, which is not claimed. In figure 6 the slip-based, relative control method is combined with the torque-based, absolute control method. However, other relative control methods, such as the ratio oscillation-based method, according to the invention, may be applied in a corresponding manner just as well.

In figure 6 it is illustrated that the conventional torque-based absolute control method is used to determine an initial set-point for the output pulley pressure Pc2, hereinafter denoted T-Pc2, in the above-described manner in blocks I, II and **III.** However, rather than directly supplying such signal T-Pc2 to the comparator IV, it is first modified by adding thereto the integrated output of a relative control method in block XIV of the combined or compound control method according to the invention.

In figure 6 the relative control method is the slip-based control method, which is not claimed, whereof the control action output APc2, hereinafter denoted s-ΔPc2, has been generated in the above-described manner in blocks VI, VII and VIII. The control action s-APc2 of the slip-based control method is integrated in block XIII of the compound control method, to generate an output pulley pressure correction signal s-Pc2. This output pulley pressure correction signal s-Pc2 is thus added to the output pulley pressure set-point T-Pc2 in block XIV, resulting in a combined desired output pulley pressure or set-point c-Pc2. The actually occurring output pulley pressure m-Pc2 is subsequently controlled in a known manner to correspond with the combined output pulley pressure set-point c-Pc2, i.e. either open-loop or closed-loop using the comparator or block IV and the output pulley pressure sensor 105 as described in the above with reference to figure 3.

Alternatively, not claimed, the output of the absolute method can be differentiated, such that only changes in the set-point are represented thereby, and added to the relative method, as is schematically illustrated in figure 7. In figure 7 the ratio oscillation-based, relative control method is combined with the torque-based, absolute control method. However, other relative control methods, such as the slip-based method, may be applied in a corresponding manner just as well.

In figure 7 it is illustrated that the conventional torque-based absolute control method is used to determine an initial set-point for the output pulley pressure T-Pc2 in the above-described manner in blocks I, II and III. However, rather than supplying such signal T-Pc2 to the comparator IV, it is instead differentiated in block XV of the combined or compound control method according to the invention. The output signal T-ΔPc2 of such differentiator or block XV thus represents only the changes in the said set-point for the output pulley pressure Pc2.

In figure 6 the relative control method is the ratio oscillation-based control method, according to the invention, whereof the control action output ΔPc2, hereinafter denoted r-ΔPc2, has been generated in the above-described manner in blocks IX, X, XI and XII. The control action r-APc2 of the ratio oscillation-based control method is added in block XIV of the compound control method to the differentiated output signal T-ΔPc2 of block XV thereof, resulting in a combined control action c-ΔPc2 for the output pulley pressure Pc2. This combined control action c-ΔPc2 is then executed in block V of the control scheme that represents the transmission.

**Claims**

**1.** Method for controlling a friction transmission for transmitting a drive torque under the influence of a normal force in a frictional contact between at least two friction surfaces, wherein a level that is required for the normal force, or at least for a first control parameter that determines the normal force, is determined in direct dependency of the drive torque, wherein a second control parameter is determined that represents a deviation between an actually prevailing normal force in the frictional contact and an optimal value therefor, which second control parameter is determined neither directly by nor in dependence on the difference between the actually prevailing normal force and the optimal value therefor, but rather in dependency on a correlation between oscillations of the normal force, or at least of a parameter determining the normal force, and a speed transmission ratio between an ingoing shaft and an outgoing shaft of the friction transmission, wherein the second control parameter is integrated, wherein the first control parameter is adapted by adding thereto the integrated second control parameter and wherein the thus adapted first control parameter serves as an input for a control system of the friction transmission for controlling the prevailing normal force.

**2.** Method according to one or more of the preceding claims, wherein, in determining the first control parameter in dependency on the drive torque, a safety factor larger than 1 is applied.

**3.** Method according to claim 2, wherein the safety factor has a value in the range between 1.1 and 3.0, preferably in the range between 1.3 and 2.0.

**4.** Method according to claim 2 or 3, wherein the first control parameter at least is determined in dependency on an effective contact radius of the friction contact and on a coefficient of friction in the frictional contract.

**5.** Method according to claim 4, wherein the coefficient of friction is updated by correlating the prevailing normal force to the drive torque when these two parameters have assumed an essentially constant value during the operation of the friction transmission.

**6.** Method according to one or more of the preceding claims, wherein the friction transmission is an continuously variable transmission comprising two pulleys with each two mutually axially displaceable pulley discs provided with a predominantly conically shaped friction surface and a drive belt with on either side thereof further friction surfaces.

**Patentansprüche**

**1.** Verfahren zum Steuern eines Reibungsgetriebes zum Übertragen eines Antriebsdrehmoments unter dem Einfluss einer Normalkraft in einem Reibkontakt zwischen wenigstens zwei Reiboberflächen, wobei ein Grad, der für die Normalkraft oder wenigstens für einen ersten Steuerparameter, der die Normalkraft bestimmt, erforderlich ist, in direkter Abhängigkeit von dem Antriebsdrehmoment bestimmt wird, wobei ein zweiter Steuerparameter bestimmt wird, der eine Abweichung zwischen der tatsächlich herrschenden Normalkraft in dem Reibkontakt und einem optimalen Wert hierfür repräsentiert, wobei der zweite Steuerparameter weder direkt noch in Abhängigkeit von der Differenz zwischen der tatsächlich herrschenden Normalkraft und dem optimalen Wert hierfür, sondern vielmehr in Abhängigkeit von einer Korrelation zwischen Schwankungen der Normalkraft oder wenigstens eines die Normalkraft bestimmenden Parameters und einem Drehzahlübersetzungsverhältnis zwischen einer Eingangswelle und einer Ausgangswelle des Reibungsgetriebes bestimmt wird, wobei der zweite Steuerparameter integriert wird, wobei der erste Steuerparameter dafür ausgelegt ist, dass der integrierte zweite Steuerparameter zu ihm addiert wird, und wobei der so ausgelegte erste Steuerparameter als ein Eingang für ein Steuersystem des Reibungsgetriebes zum Steuern der vorherrschenden Normalkraft dient.

**2.** Verfahren nach einem oder mehreren der vorhergehenden Ansprüche, wobei beim Bestimmen des ersten Steuerparameters in Abhängigkeit von dem Antriebsdrehmoment ein Sicherheitsfaktor größer als 1 angewendet wird.

**3.** Verfahren nach Anspruch 2, wobei der Sicherheitsfaktor einen Wert im Bereich von 1,1 bis 3,0, vorzugsweise im Bereich von 1,3 bis 2,0, hat.

**4.** Verfahren nach Anspruch 2 oder 3, wobei der erste Steuerparameter zumindest in Abhängigkeit von einem effektiven Kontaktradius des Reibkontakts und von einem Reibkoeffizienten in dem Reibkontakt bestimmt wird.

**5.** Verfahren nach Anspruch 4, wobei der Reibkoeffizient durch Korrelieren der vorherrschenden Normalkraft mit dem Antriebsdrehmoment aktualisiert wird, wenn diese beiden Parameter einen im Wesentlichen konstanten Wert während des Betriebs des Reibungsgetriebes angenommen haben.

**6.** Verfahren nach einem oder mehreren der vorhergehenden Ansprüche, wobei das Reibungsgetriebe ein stufenlos verstellbares Getriebe ist, das zwei Riemenscheiben mit jeweils zwei gegenseitig axial verlagerbaren Riemenscheibenelementen, die mit einer hauptsächlich konisch geformten Reiboberfläche versehen sind, und einen Antriebsriemen mit weiteren Reiboberflächen auf jeder Seite hiervon umfasst.

**Revendications**

**1.** Procédé destiné à commander une transmission à frottement pour transmettre un couple d'entraînement sous l'influence d'une force normale dans un contact par frottement entre au moins deux surfaces de frottement, dans lequel un niveau requis pour la force normale, ou du moins pour un premier paramètre de commande déterminant la force normale, est déterminé directement en fonction du couple d'entraînement, dans lequel un second paramètre de commande représentant une déviation entre une force normale prévalant vraiment dans le contact par frottement et une valeur optimale correspondante n'est déterminé ni directement ni en fonction de la différence entre la force normale prévalant vraiment et la valeur optimale correspondante, mais plutôt en fonction d'une corrélation entre les oscillations de la force normale, ou du moins d'un paramètre déterminant la force normale, et un rapport de transmission de vitesse entre un arbre d'entrée et un arbre de sortie de la transmission à frottement, dans lequel le second paramètre de commande est intégré, dans lequel le premier paramètre de commande est conçu en lui ajoutant le second paramètre de commande intégré et dans lequel le premier paramètre de commande ainsi conçu sert d'entrée pour un système de commande de la transmission à frottement en vue de commander la force normale prévalant.

2. Procédé selon l'une quelconque des revendications précédentes ou plusieurs d'entre elles, dans lequel lors de la détermination du premier paramètre de commande en fonction du couple d'entraînement, un facteur de sécurité supérieur à 1 est appliqué.

3. Procédé selon la revendication 2, dans lequel le facteur de sécurité a une valeur située dans la plage comprise entre 1,1 et 3,0, de préférence dans la plage comprise entre 1,3 et 2,0.

4. Procédé selon la revendication 2 ou 3, dans lequel le premier paramètre de commande au moins est déterminé en fonction d'un rayon de contact effectif du contact de frottement et d'un coefficient de frottement observé dans le contact de frottement.

5. Procédé selon la revendication 4, dans lequel le coefficient de frottement est mis à jour en corrélant la force normale prévalant avec le couple d'entraînement lorsque ces deux paramètres ont conservé une valeur essentiellement constante lors de l'utilisation de la transmission à frottement.

6. Procédé selon l'une quelconque des revendications précédentes ou plusieurs d'entre elles, dans lequel la transmission à frottement est une transmission variable en continu comprenant deux poulies avec chacune deux disques de poulie mutuellement mobiles dans le plan axial pourvus d'une surface de frottement prenant une forme à prédominance conique et une courroie d'entraînement comportant sur chaque côté d'autres surfaces de frottement supplémentaires.

**FIG. 1**

**FIG. 2**

**FIG. 3**

**FIG. 4**

**FIG. 5**

**FIG. 6**

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0858564 A
- EP 2008053548 A
- WO 2009007450 A
- EP 2176572 B